Europäisches Patentamt

**European Patent Office**

**Office européen des brevets**

(11) Publication number: **0 458 211 A2**

## EUROPEAN PATENT APPLICATION

(21) Application number: **91108033.1**

(22) Date of filing: **17.05.91**

(51) Int. Cl.⁵: **H02P 6/02, H02P 7/00**

(30) Priority: **22.05.90 IT 6737390**

(43) Date of publication of application:
**27.11.91 Bulletin 91/48**

(84) Designated Contracting States:
**AT DE ES FR GB IT NL SE**

(71) Applicant: **Marandola, Franco**
**Via Corneliano d'Alba no 31**
**I-10146 Torino(IT)**

(72) Inventor: **Marandola, Franco**
**Via Corneliano d'Alba no 31**
**I-10146 Torino(IT)**

(54) Brushless motor and eprom or pc programmable control system.

(57) A dc powered electric motor producing the same torque and angular speed in either direction of rotation, current drain being the same. The motor comes with an electronic independent control and regulation system compact with motor or external in a single board or modular with interchangeable modules. Different motors fitted with "artificial intelligence" onboard can comunicate directly each others, recognize the external world, execute and transmit instructions, accordingly.

This invention concerns a dc powered electric motor capable of producing the same torque and angular speed in either direction of rotation, current drain being the same. This motor can be produced in 2 or more than 2 phase versions with a 2 or more than 2 pole permanent magnet rotor, or alternatively it can be produced with a mixed rotor or even in a version involving 2 or more than 2 phases with a self-energized wound rotor controlled from the outside. The motor comes with an independent control and regulation system consisting of an electronic circuit including a number of circuit blocks. Said circuit blocks are: a final power stage, a control, a protection, and an interface circuit as well as one for special functions; these may change, depending on the functions requested of the motor. According to the invention, the motor has been built in keeping with the characteristics described in the claims.

The advantages afforded by such motor, according to the invention, which includes the relative electronic management components, may be listed as the following main characteristics:

1) Possibility of controlling the number of revolutions, between a minimum and a maximum, so as to keep them constant with varying resistant torque and varying supply voltage.

2) Possibility of braking, to a sudden halt, with 360/N phase positioning.

3) Starting with progressive acceleration (soft-start) which can be pre-adjusted.

4) Possibility of maintaining a resistant torque with the motor stationary.

5) Start and stop with programmable acceleration and deceleration.

6) Possibility of programming the number of revolutions to be performed by the motor automatically.

7) Possibility of programming highly complex functional cycles.

8) Energy recovering during braking and recovering Lenz energy.

9) Limitation of the maximum torque which the motor can deliver.

10) Possibility of keeping power constant with varying number of revs (RPM).

11) Thermal protection of the motor and the electronic circuit.

12) Current limitation (over-current).

13) Voltage limitation (over-voltage, under-voltage).

14) Double motor characterization: 6000/3000 RPM.

15) Optic reading toward the outside world.

16) Possibility of integration into a system of several "intelligent motors" with communicate with one another, to form a production chain.

17) Possibility of active interfacing between the motor and the outside world.

18) Possibility of on-going monitoring and detection of HW & SW malfunctions.

19) Remote control via a Personal Computer.

20) Possibility of vocal indications on the motor's operation modes.

21) The demagnetisation of the coils of the stator is caused by creating a second field (coincident with the previous field) which, flowing through the rotor, creates a "useful flux" , thus improving the overall efficiency.

To substantiate the above, a list of the figures illustrating some of the characteristics of the invention is given below:

Fig. 1): Example, of a non limiting character, of a motor produced in accordance with the description given in this application.

Fig. 2 a,b,c,d,e): Example, of a non limiting character, of an encoder, a shutter, sequence of sensor signals.

Fig. 3 a,b,c,d,e,f): Example, of a non limiting character, of 2, 4 pole permanent magnet rotors, with isotropic and non-isotropic structure, wound rotors and rotor as a ring with internal incorporated pump

Fig. 4 a,b): Example, of a non limiting character, of motors with wound rotors.

Fig. 5 a,b,c): Example, of a non limiting character, of the winding of a 24 slot, 4 pole 2 phase motor, with two-wire winding; of the winding of an 8 slot, 2 pole, 4 phase motor, with full bridge winding; with series-parallel winding.

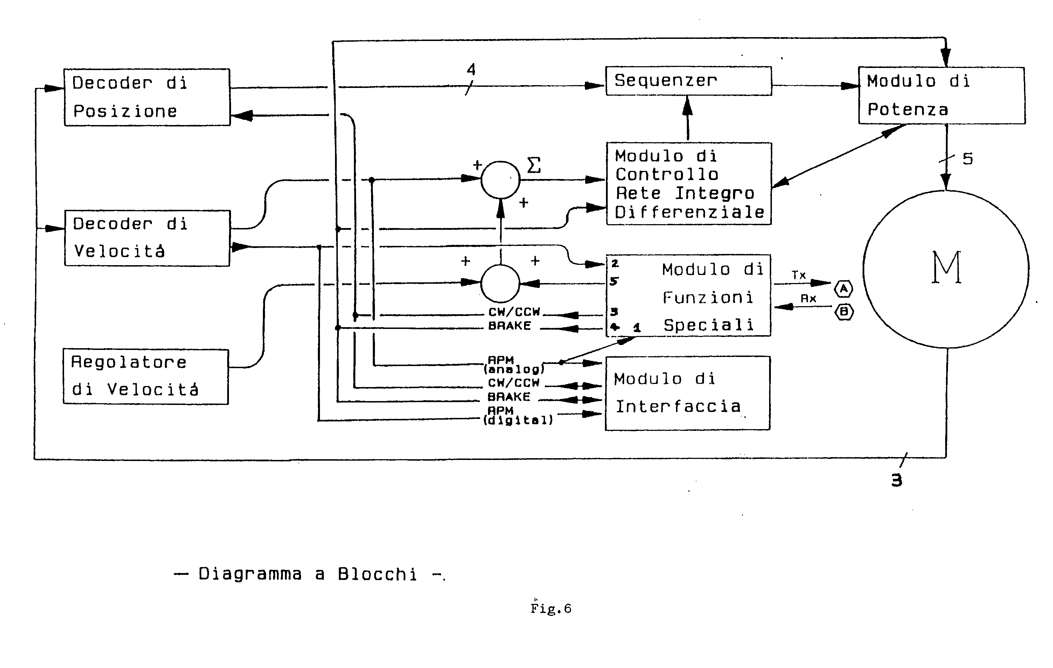

Fig. 6): Example, of a non limiting character, of the block chart of the control system.

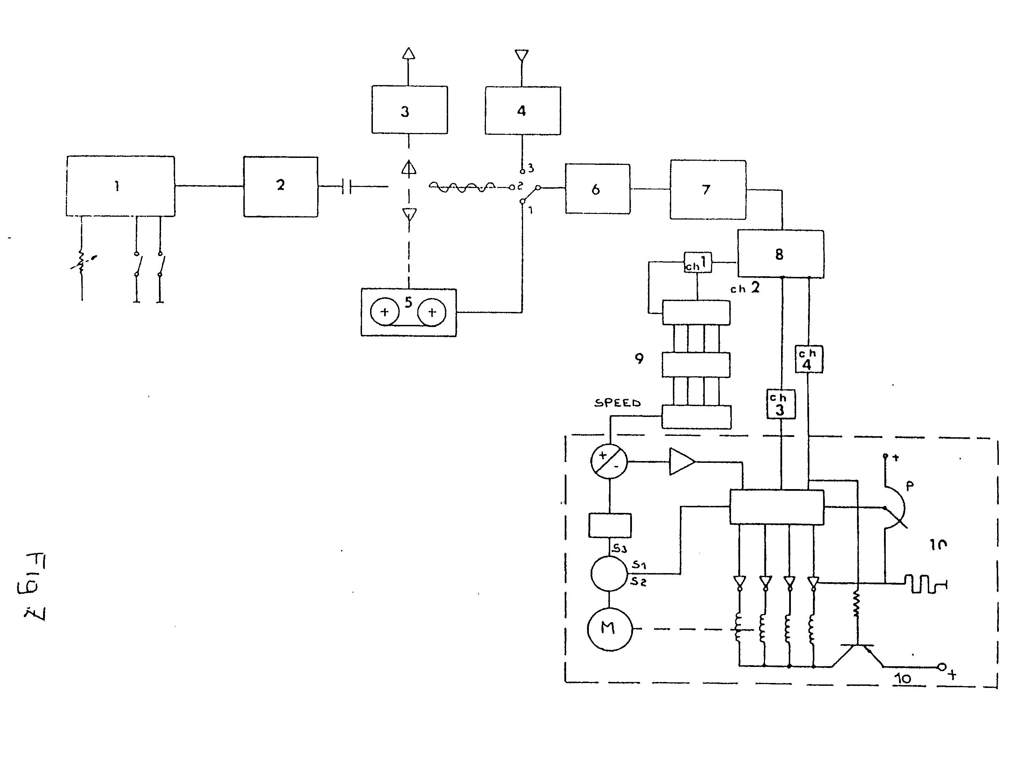

Fig. 7): Example, of a non limiting character, of the block chart and details of a remote controlled motor.

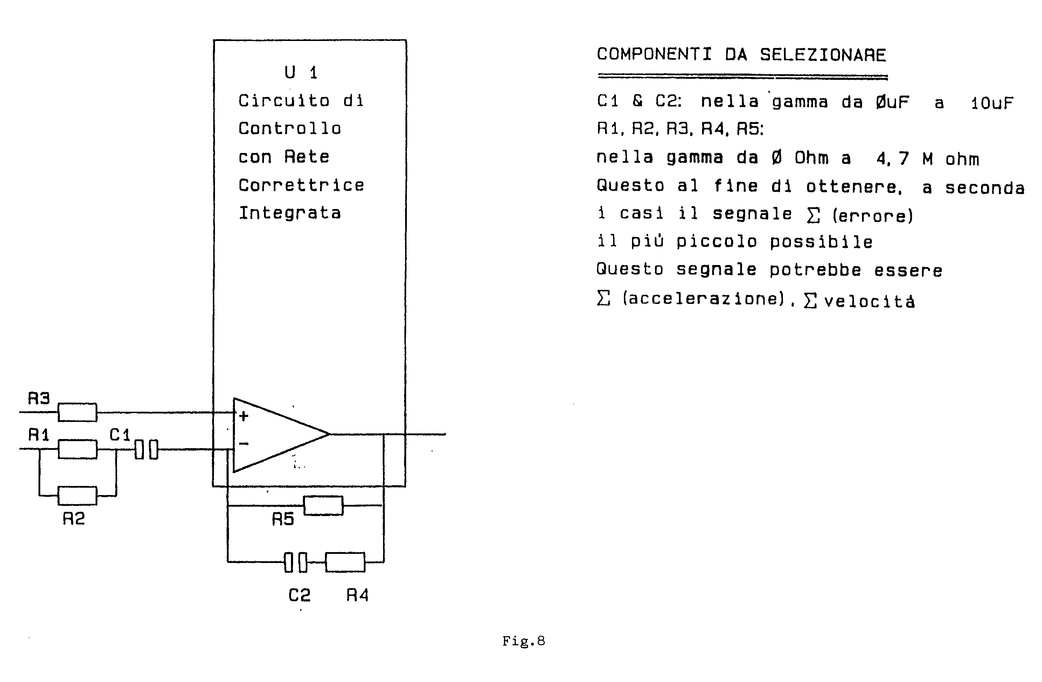

Fig. 8): Example, of a non limiting character, of a detail of the control module.

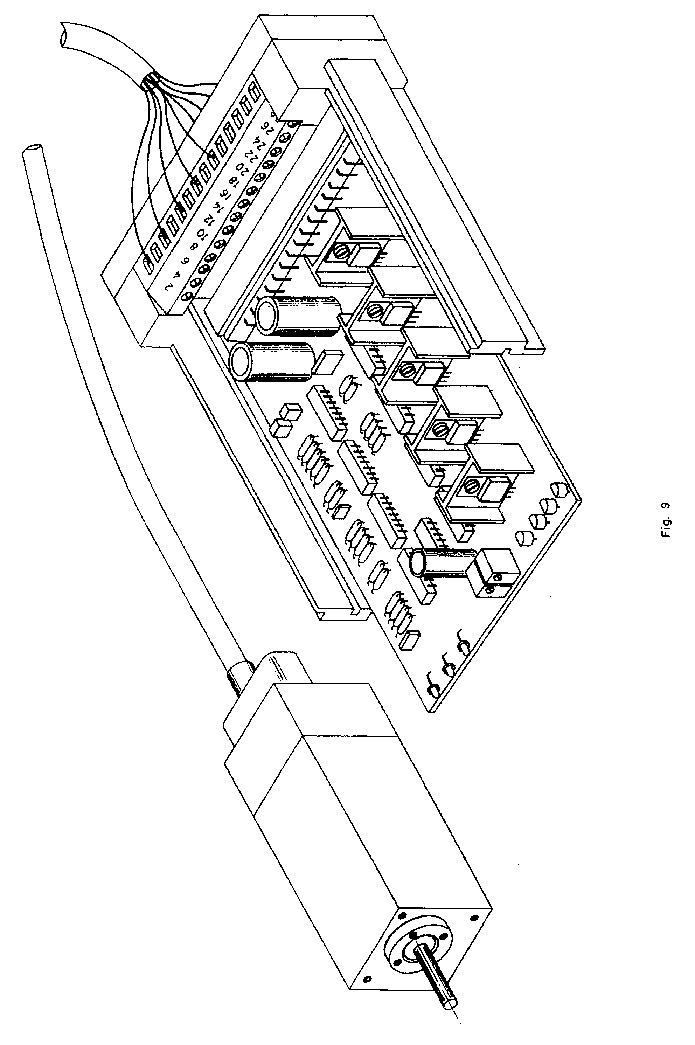

Fig. 9): Example, of a non limiting character, of a motor and electronic component board.

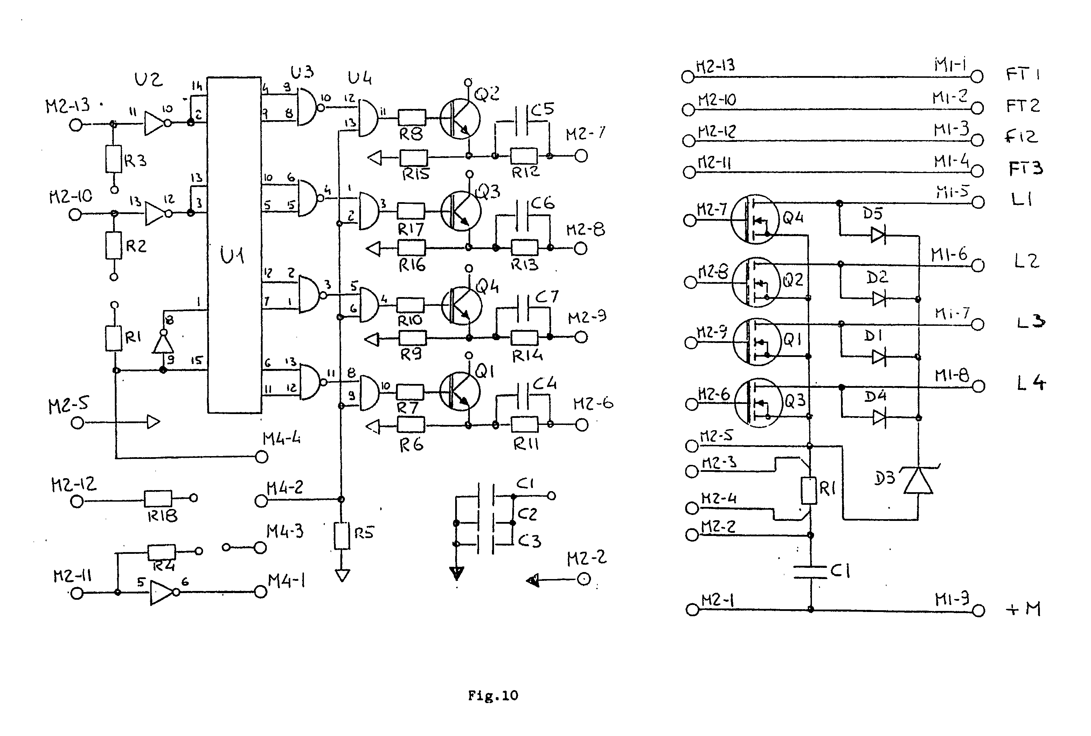

Fig. 10): Example, of a non limiting character, of a complete control and regulation diagram of a motor with bifilar system winding.

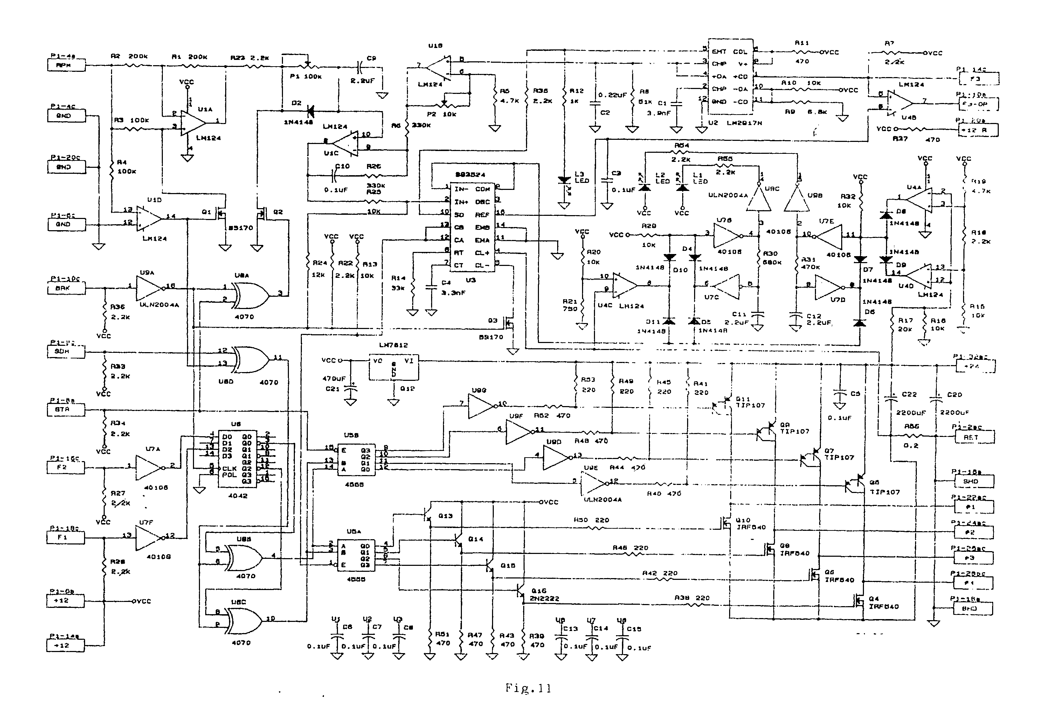

Fig. 11): Example, of a non limiting character, of a complete control and regulation diagram of a motor with full bridge winding.

Fig. 12): Example, of a non limiting character, of a circuit block chart of the motor and "artificial intelligence" complex.

Fig. 13): Example, of a non limiting character, of an "artificial intelligence" program, supplied for explanatory purposes.

Fig. 14a,b,c): Example, of a non limiting character, of a "reading" taken with an optical scanner, plotted on a cartesian diagram; selfcomunicating motors without PLC.

Fig. 15): Example, of a non limiting character, of manual setting of the operation parameters of a motor with "artificial intelligence".

Fig. 16): Example, of a non limiting character, of a SASD used for the opening and closure of doors and gates.

Fig. 17): Example, of a non limiting character, of a brushless motor with external rotating structure (motorwheel).

Fig. 18): Example, of a non limiting character, of a motor and the rotor pump working immersed in a liquid.

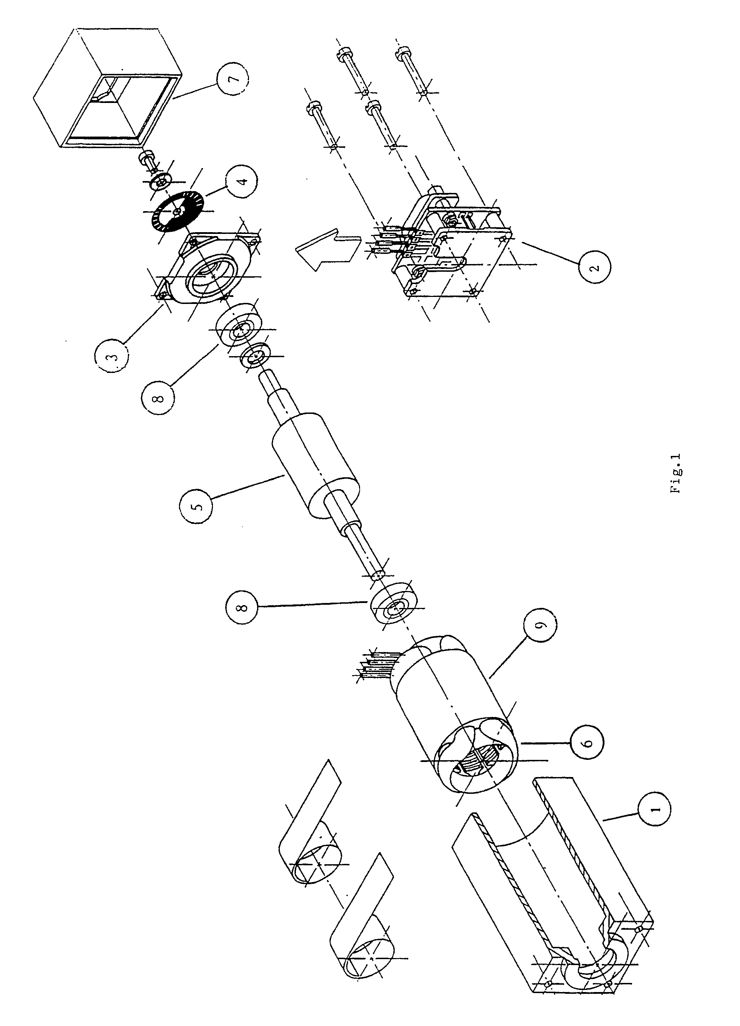

Fig. 1 illustrates, as an example of a non limiting character, a motor possessing the following characteristics:

Voltage 24V dc

Minimum speed 250 RPM

Maximum speed 6000 RPM

Rated torque 5 Ncm

Direction of rotation: clockwise (CW), counterclockwise (CCW).

External dimensions 35x35x105 mm.

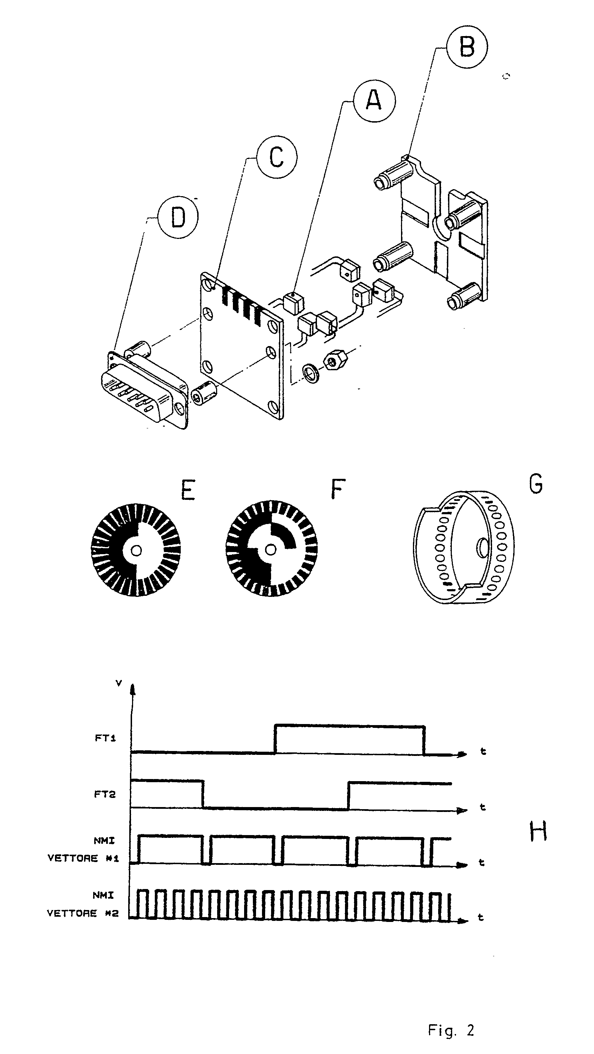

The stator (9) is housed in an aluminium enclosure (1). The encoder (2), consisting of 3 pairs of optical detectors (Fig. 2a), is fastened to the rear dome of the motor (3). The shutter (4) is integral with the rotor (5) and rotates between the pairs of phototransistors and photodiodes. The winding (6) is connected to the printed circuit (Figure 2c) on special bump contacts.

The same printed circuit also houses the photodiodes and a connector (Fig. 2d) governing all the encoder signals and motor windings. The winding, of imbricate type, is wound on an 8 slot core. As in conventional dc motors, in the motor being considered maximum torque is developed when the magnetomotive force (FMM) generated by the armature is in quadrature with the excitation; this is ensured by the feedback of the rotor position angle picked up by the sensors. The sensors shown in Fig. 2a), which are modulated by the shutter (integrally mounted with the rotor shaft), perform the function of supplying the signals at the exact time when winding commutation has to take place. Such signals are processed by a special circuit as a function of the desired control philosophy. The term "exact time" is used to indicate the time which makes it possible to obtain the maximum torque and angular speed in either direction of rotation. By "special circuits" it is means those devices, consisting of either separate of integrated components, which are responsible for the decoding of pulses or the partialization of latter, as is usually obtained through the PWM method. The pulse sequence can be seen more clearly in Fig. 2h), which obviously applies to the case of a 2 pole 4 phase motor.

The greater efficiency of the motor which is the object of this invention, at the commutation stage, is obtained when the commutation plane (formed by the complex made up of the sensors and the shutter illustrated in Fig. 1) is correctly adjusted, meaning that in order to have the motor develop the same torque and angular speed in either direction of rotation for the same flow and current, the commutation plane must be symmetrical, so as to ensure that the "direct" and the "quadrature" axes are set at a 90 angle.

As for the rotor or inductor, whose function is to create the induction flow, it can be built in various shapes and to different operating principles, such as, for instance:

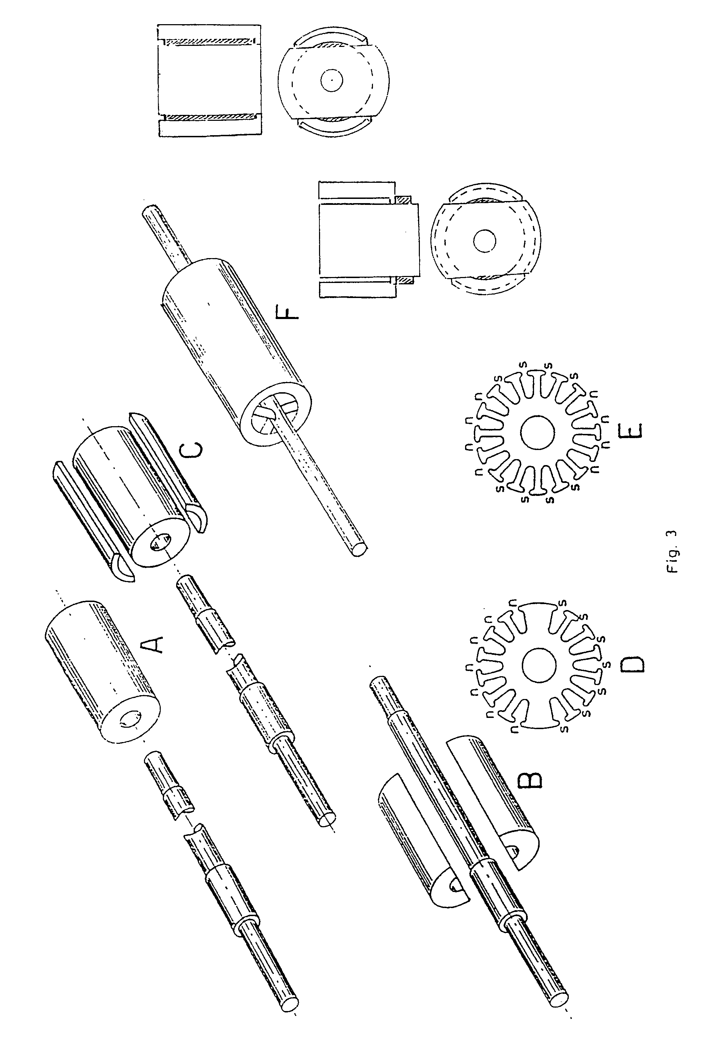

a) Permanent magnet rotor with 2,4 or more than 4 poles (Fig. 3);

b) 2,4 or more than 4 pole rotor wound on a solid or laminated core of ferromagnetic material;

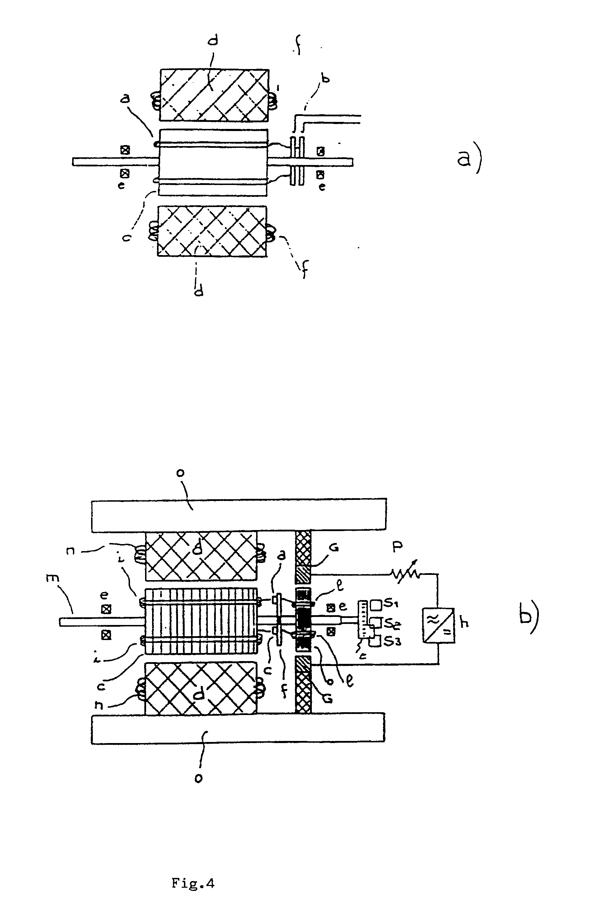

c) 2,4 or more than 4 pole rotor wound on self-energized ferromagnetic material (Fig. 4).

The permanent magnet rotor can be built in different configurations, as a function of rotor diameter and other factors: with salient poles, smooth poles, made up of two circular sectors, or else as a cylinder shaped perforated single piece. Fig. 3) illustrates a number of solutions: b) and c) concern a 2 pole rotor, a) shows a 2,4 pole rotor. The structure with 2, 4 or more than 4 poles may either be isotropic or non isotropic as a function of increased torque requirements. The solution illustrated in Fig. 4a) is most suitable for a wound rotor supplied by an external dc source, requiring power supply rings for the rotor windings. The stator shown in Fig. 4a) contains the armature windings, the 2, 4 or more than for pole rotor is of laminated type or of some other ferromagnetic material. Power to the inductor circuit and the windings is supplied by an external dc source through the slip ring, the rotor is supported by bearings which enable it to rotate inside the stator.

The solution depicted in Fig. 4b), wound rotor with external excitation adjustment without rings, is that of a motor with self-energized wound rotor. This solution may prove more advantageous compared to that of a permanent magnet rotor when the power values involved exceed certain limits.

The shutter is fixed rigidly to the rotor shaft. It can be built either of a light metal, such as aluminium, of a plastic material, or else of a suitably treated transparent material. The shape of the shutter can be receptacle, cup or disk like. The shutter is subdivided into two distinct sections, as shown in Figs. 2 e,f,g). One of them consists of a closed opaque sector extending over an angle of 180 mechanical degrees plus an angle of approx. 5 (the angle depends on the type of sensors used) designed to shut out photodiodes F1, F2 of Fig. 2) through half the rotation and of a transparent sector which excites them. The windows that are part of the shutter excite photodiode F3.

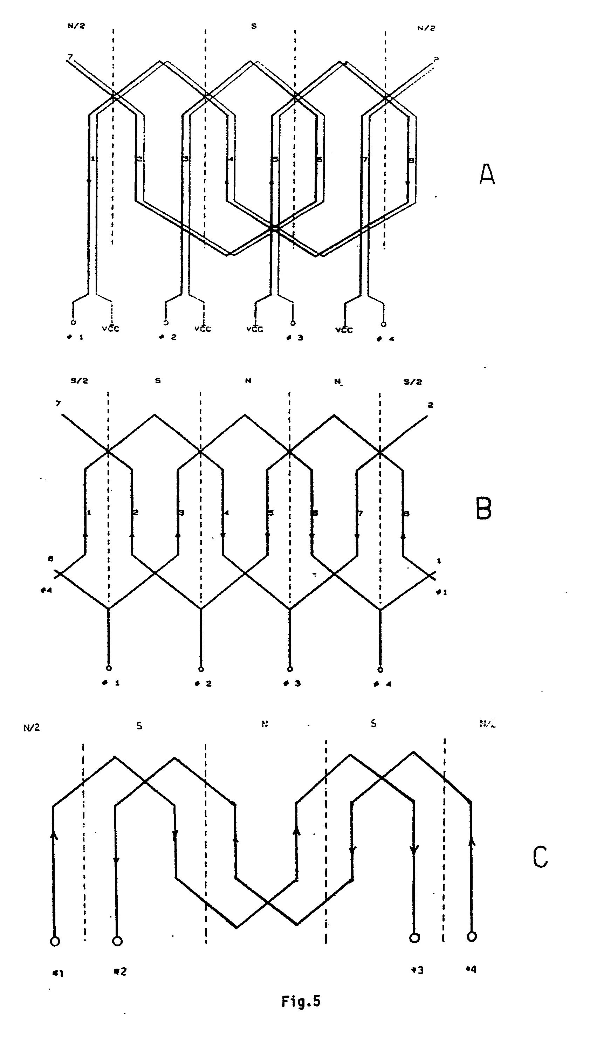

Fig. 5) illustrates the two types of connection of the stator winding:

Fig. 5a) two-wire winding

Fig. 5b) full bridge winding.

Fig. 5c) serial-parallel winding.

The salient feature of the two-wire winding is that it is ideally suited for low power applications.

The full bridge winding is characterized by the fact that all its windings are used simultaneously and hence its efficiency is about 1.4 times that of a two-wire winding.

ELECTRONIC SYSTEM OPERATING THEORY

The circuit which accomplishes the functions described in the introduction is made up of the following circuit blocks or "modules".
- Final power stage.
- Control circuit.
- Protection circuit.
- Interface circuit
- Special function circuit.

1) The final power stage consists of two ore more pairs of MOSFET's or power transistors with the relative drivers, for high power motors it is possible to use two or more MOSFET's or transistors in parallel. Each MOSFET or transistor pair can be composed of "P" channel and an "N" channel, or else by two "N" channels (Totem-pole) as needed.

2) The control circuit is responsible for sending to the final power stage the signals necessary for the motor to deliver the power and rev number required. In order to perform this function, it processes a series of signals coming from the interface circuit and from the motor itself.

3) The protection circuit has the task of preventing accidental overlaod, variations in supply voltage or failures of any sort from damaging the system and it acts directly on the control circuit.

4) The interface circuit has the task of the converting the signals coming from the outside world into signals compatible with the control circuits; furthermore, - 10 - it converts to the required levels the signals to be sent out to the outside world.

5) The special function circuit is capable of having the motor perform any kind of repetitive cycle including in the motor's operating range. It receives the signals from the interface circuit, processes them and supplies the signals to the control circuit.

The motor has, keyed onto its shaft, a position detector (a shutter rotating in a phototransistor system) which supplies a rotor position logic signal (position Encoder). This signal determines the sequence with which the stator windings are powered. Over a complete rotation, the position signal has a number of combinations that corresponds to the number of windings of the motor.

The encoder's logic position signal is conveyed to the circuit which must decode it (Decoder). Decoded signals are sent on to the respective drivers. The sequence and phase with which the motor windings are powered determines the direction of rotation, not the number of revs (RPM). The number of revs can be controlled in two ways, each of which has its own different application:

1) Control of the duty-cycle, a solution which, as is known, has the drawback that at each ON/OFF commutation spikes are generated, and therefore energy is lost, according to Lenz Law. The circuit, which is the object of this invention, recovers this energy and returns it to the power supply through the final power stage. This recovery takes place in any motor operating conditions (braking, deceleration, etc...).

2) Control of the voltage level applied to the motor. With this system, instead, energy losses inside the motor because of Foucault's currents are negligible. The difference in respect of the previous system consists in the adoption of a switching regulator controlled by the speed regulator circuit of the motor control board.

The control circuit may use the logic position signal as a speed signal too. When the number of revs changes, due to a change in the load, the electronic circuit modifies the signal sent on to the drivers of the power stage, until the number of revs returns to its correct value. This control is performed by comparing the analogue control signal coming from the interface circuit with the feed-back signal coming from the motor. This comparison generates the error signal which, suitable processed by an integrating network, determines the variation in the duty cycle in the one case and in the voltage in the other. This type of regulation and control of the number of revs (RPM) affords a satisfactory degree if precision, however, is a stricter tolerance is required, it is advisable to use a higher resolution signal, by making use of a phototransistor for the tachometric signal only. If no great accuracy is required, it possible to used the current absorbed by the motor as the feed-back signal. By amplifying this signal it is possible to ensure an acceptable speed control.

The protection circuit steps in under the following conditions:

1) Voltage variations beyond a certain threshold;

2) Motor overload (current limiting);

3) Number of revs (RPM) exceeding the predetermined value.

In the first two cases, a protection cuts off the power supply if the malfunction lasts more than a certain programmable time interval. This means that an instantaneous overload, or voltage variation, is permitted. In the third case, the circuit merely poses a limit on maximum RPM. If the protection has stepped in to cut off the power supply, a "reset" is necessary.

Through the interface circuit it is possible to send a "failure" signal to the outside, and it is also possible to send the speed signal to an external unit in the form of an analogue voltage, with any range, or in digital form (TTL, ECL, Open-circuit).

Furthermore, it is possible to interface the motor with a computer, provided that suitable software programs are used. Start and stop signals can be programmed as a function of other events. Hence, it is possible to cover a very wide range of applications, the special function circuit section is extremely versatile.

The motor which is the object of this invention works with an "artificial intelligence" either on-board or on a board and it is capable of performing even very complex operations which, as a rule, are separately processed by costly and extremely complex systems (PLC). This innovative system has repercussions on the entire field of the control/actuation of small to large motors, in that it can replace PLC's.

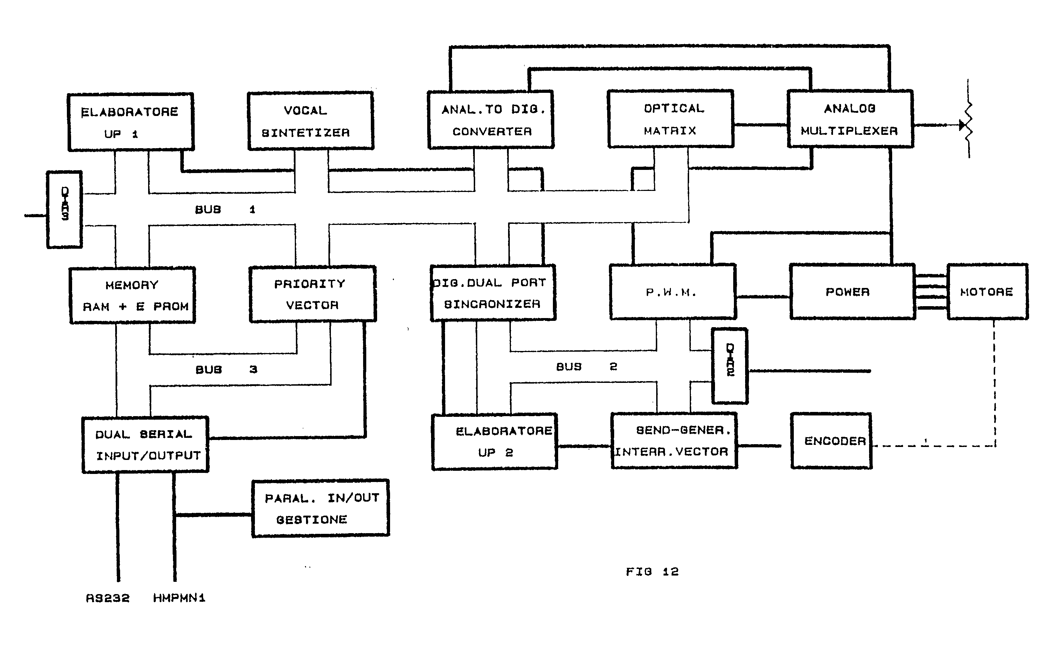

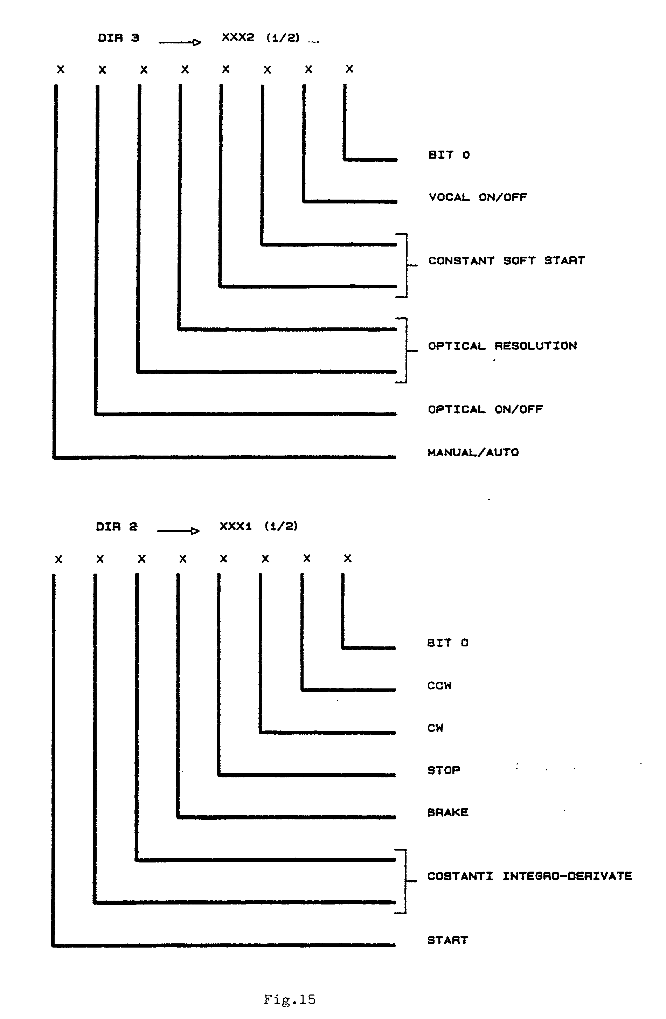

The motor/"artificial intelligence" combination consists of a functionally modular system (See Fig. 12)) comprising the following blocks:
1) Stator, rotor, encore, enclosure.
2) Electronic control unit of motor phases and RPM.
3) Data processor.
4) Serial converter and "HMPMPN1" manager.
5) Optical scanner.
6) In line INPUT-OUTPUT (I/O) manager.
1) Stator, rotor, encoder, enclosure: according to the indications provided in the first part of this description.
2) The phase and RPM electronic control unit is a functional block, based on the integration of a portion of the data processor with the Software and with the power section which governs the motor phases. In greater detail, it is composed of:
- 4/1 Analog Mux
- A/D Analog to Digital converter
- PWM
- Vector interrupt generator
- Dual Port Communication
- uP2
- Discrete input Register (1-2-3)
- Discrete output Register (1-2-3)
- Software
The operating principle of this circuit module is as follows:
Through the Discrete Input Registers DIR2 and DIR3 (as shown in Fig. 15) the following parameters (mentioned as an example of a non limiting character):
Soft Start 200 mS 400 mS 800 mS 1600 mS
Monitor resolution 256 Pixel 512 Pixel 1,024 Pixel 2,048 Pixel
Optical scanning "1" ON "0" OFF
Voice "1" ON "0" OFF
Auto/manual selection "1" AUTO "0" MANUAL
Stop, CW, CCW, Start
Integro-derivating constants for the stabilization of RPM 20mS 40mS 100mS 200mS This information is supplied to the uP2 through the Inputs ports 2,3 or via the locations in the RAM data zone of the mP1, defined as "data processor".

At Start, the sensors located on the motor encoder generate non maskable interrupts (as illustrated in Fig. 2h)) that the mP must necessarily manage. The position sensors generate interrupts with vector #1, while the speed sensor, that is, the sensor that provides the tachometric feed-back indication, has vector #2. When the interrupt request occurs, uP2 reads the associated vector which determines the subroutine to be followed. There are two possible subroutines: one for the management of the phase rotation associated with vector #1 and the other for the tachometric calculation associated with vector #2.

Subroutine 1 reads the logic status of the position sensors through DIR1, carries out its decoding and the relative "print-out" on the Discrete Output Register DOR1, conveying these signals to the power circuit block, which amplifies the voltage and the current level. Subroutine 2, instead, performs the integro-derivative differential calculus between the two variables: a) set speed, and b) actual speed. The result of the mathematical function is " E " (error), which is expressed as a digital number that is processed by the PWM circuit of the DSP in order to obtain a Duty-cycle which is variable as a function of speed, of the load and the supply voltage of the motor.

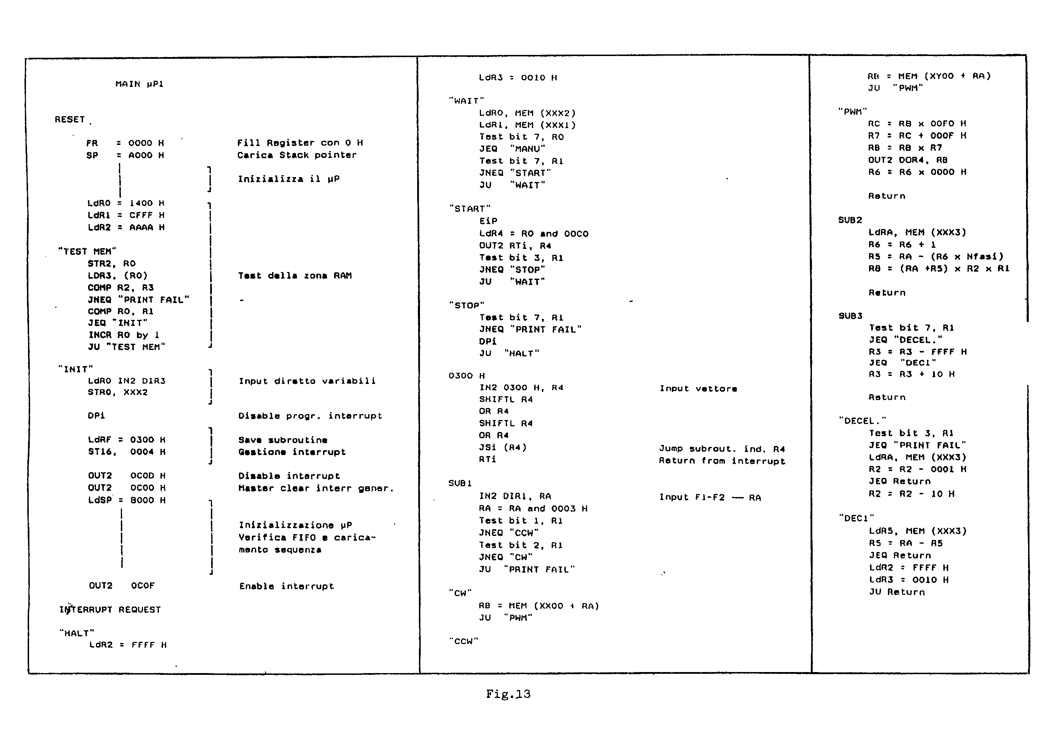

The integro-derivation parameters inside subroutine 2 may be redefined by the user to obtain response speeds and stabilization times, with varying load, that can be pre-adjusted as a function of user needs (Fig. 15). Fig. 13 shows an explanatory, non limiting, programme.
3) Data processing is the most complex part, in that it integrates Hardware and Software.

Hardware consists of the Multiprocessing Data system currently used in Digital Signal Processing (DSP) equipment.
The Software consists of preformed matrices (macroroutines) that are selected by the operator at the state of pre-programming, together with the relative timing and the values to be taken on by the variables processed by such macroroutines.

The Multiprocessing Data system offers the advantage of performing operations in real time, as it uses several microprocessors which are entrusted with the management and calculation of the following main functions:

- Processing of user data
- Optical scanning
- Voice
- Organizing the transfer of data
- Speed derating
- Calculation of the available torque

Moreover, the processor module has a re-structurable "priority" vector which can be redefined by the user at the programming stage. The significance of this vector is appreciated when the processor communicates with its "likes" (by which it is means a series of motors capable of communicating with one another) through the serial channel it is equipped with. An example, provided for explanatory, non limiting purposes, can be that of three "intelligent" motors:

- Motor 1 priority No. 1
- Motor 2 priority No. 2
- Motor 3 priority No. 3

Motor 1 with the lowest vector takes precedence over the rest and is defined as the "master" motor: it can have motors 2 and 3 perform any function, wheter simple or complex. A simple function is a "package" of data which motor 1 sends on to motor 2 and the latter interprets and then carries out (e.g. 3000 revs forward, Stop, etc...).

A complex function is a "package" of data which is transmitted by motor 1 to motor 3 and that the latter interprets as the running of a subroutine already present inside it and hence pre-defined by the user. This subroutine may contains instructions such as: 3000 revs forwards, Wait 3 sec, Dec 10 g/sec, Wait 10 sec, Stop (return). Upon the return form the subroutine or at the end of the execution of a direct command, the subroutine sends and "End of Seq." message to the "master. As a result, the "master" knows at all times what the "slave" motors are doing and whether or not they have received the instructions or are free to carry out a new function. Upon receiving a request from the "master", the other two control units are forced to cut out their communication on the serial channel, to take it up again later on.

While running its program, through suitable instructions, each "master" can redefine its own vector as well as that of its "likes". This makes it possible to transfer the attribute "master" and hence the control to a motor which had been serving as a "slave" until then. This system makes it possible to obtain the following characteristics:

- motor with extremely reduced mass storage
- motor with re-structurable decision-making and control priorities
- extraordinary system versatility.

The correct execution of the integrated Hardware-Software functions is requested through a Watch-Dog Timer which supervises the execution of the program. This is reset cyclically by instructions located inside the Main program.

4) The serial converter permits communications via the two serial buses by means of which which the motor is interfaced with the external units.

The data captured in parallel mode inside is transformed into a PISO (Parallel Input Serial Output) sequence and formatted according to the destination bus.

Bus 1 is used for communications to the Personal Computer, according to the "RS 232" standard.

Bus 2 is used for the exchange of information between motors, according to the "HMPMN1" standard which is also cover by this Description.

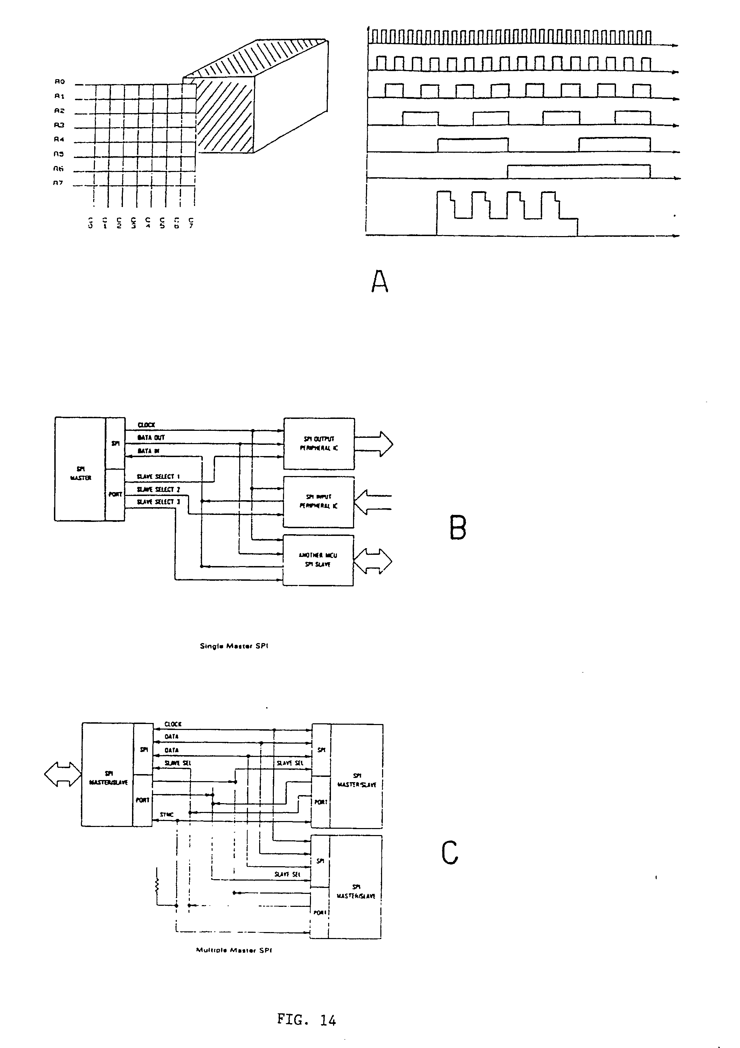

5) The optical scanner enables the motor being consider to "read" the external world (See Fig. 14). Thus, it is possible to read the profile and shape of a given piece passing close to the motor.

This module may have a different degree of sensitivity and accuracy depending on the readings to be taken. This information, when converted into electric signals, can be managed by the operator who introduces them in the form of normal data, into macroroutines specially designed for a correct interpretation on the part of the Processor Module. Hence it is possible, as a non limiting example, to have a motor belonging to an assembly line perform, or refrain from performing, given operations on a piece, depending on the shape of the latter. Another motor at the end of the line will be capable, through its arm, to reject (or not to reject) a piece by "seeing" whether or not all operations have been performed.

The motor which the object of this invention may therefore "take a photograph" of the outside world and compare it, through the Software and Hardware of the processor, with previously stored "photographs" or with ideal samples specified at the programming stage. The important characteristic stemming from this, is the visual self-teaching capability possessed by the motor being considered.

6) The circuit module which acts as the Manager of the I/O lines enables the motor to interact in an active manner with the outside world. This is the only functional block that does not reside on-board the motor. This is due to the technical characteristics of the latter:

- All inputs and outputs must be "Floating" (to avoid disturbances or wrong connections which might jeopardize the correct operation of the motor).

- The power which these outputs must be able to deliver has to be very high. Therefore, in order to meet both requirements, relays which ensure the mutual galvanic insulation of the Input and Output signals and can supply a considerable power are used.

At any rate, this block still an active part of the motor covered by this invention, in that it is connected to the "HMPMN1" serial bus. The potential of this system lies in the fact that it is possible to have more than one I/O module per motor, since, working through a Floating address software, there are no hardware limits on the structure. As already pointed out, this module too has an active "intelligent" part (uL) which speeds up the exchange of data between the motor and the I/O module. The system is supplemented by a programming unit which makes it possible to structure the macroroutines already present on-board the motor according to a given chain defined by the user. Once defined, the structure remains permanent on-board the motor, thanks to the presence of non volatile memories.

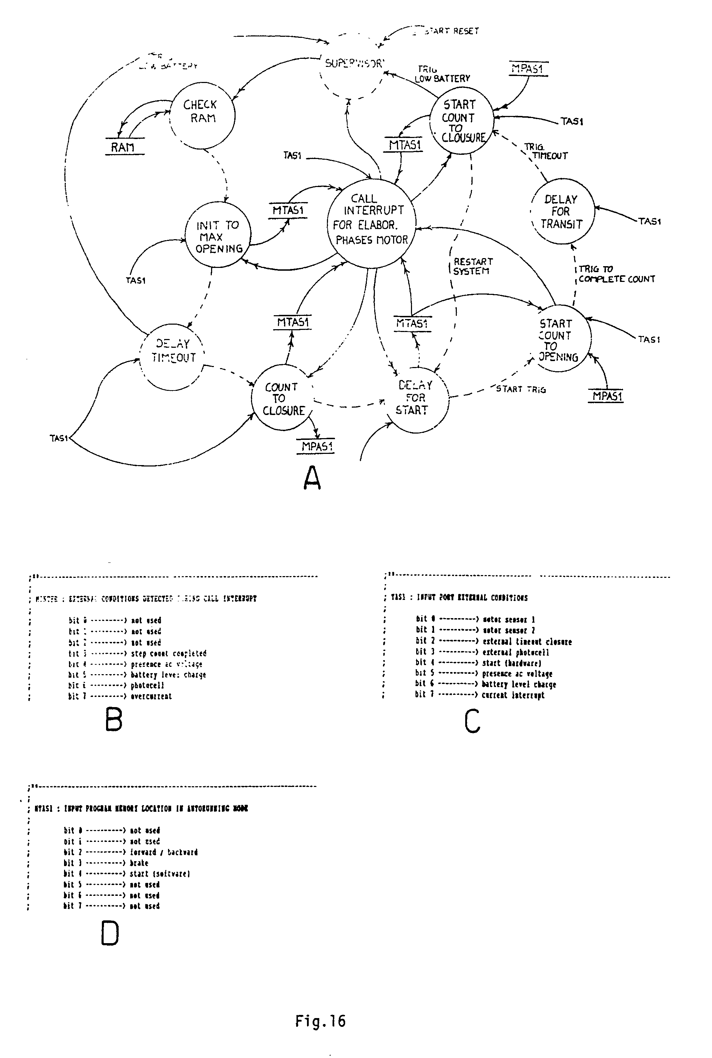

An example of an industrial realization of our invention, is the management of a brushless motor applied for the automatic opening and closure of doors/gates. It is rappresented in Fig. 16. The advantages are the following:

1) Easy to install and calibrate.

2) All end line switches or sensors are eliminated.

3) Eliminations of the clutch in the telescopic arm and its hermetic seal containing the lubricating oil.

4) In line with the highest safety standard. Overcurrent occurences are managed taking into consideration different situations as detailed in the program.

5) Possibility to carry-on few more operations with the use of a battery in the event of alarms mains supply deficiency.

6) Minimum hardware integration that reduces and simplifies the system leading to considerable cost savings.

7) Continuous bite.

8) Maximum point of opening and closure automatically selected

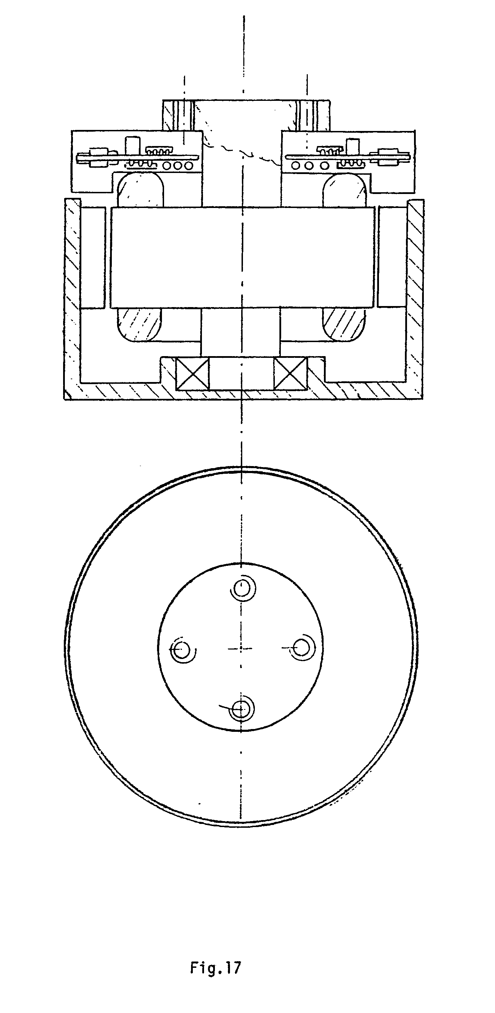

Other two applications of industrial realisations of our invention are represented in a) Fig. 17 that shows a motorwheel with rotating permanent magnets externally mounted, having the fixed stator internally, used for electrical light veicle.

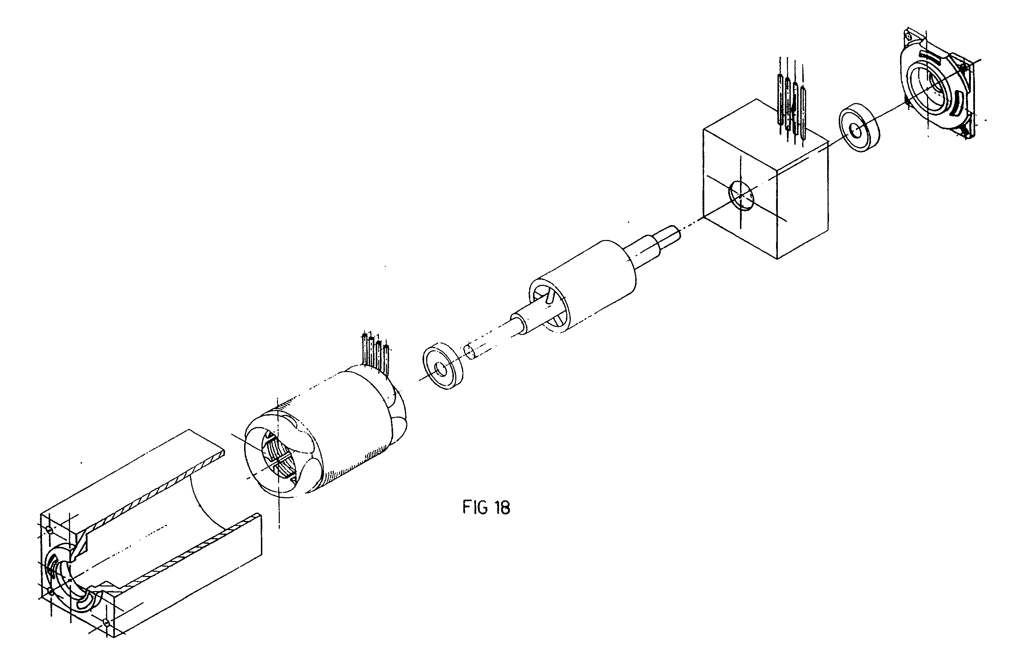

b) Fig. 18 that shows a motor using a special open cilinder rotor incorporating inside the shaft with blades working as a pump.

## Claims

1. A 2 or more than 2 phase dc brushless motor which is controlled, managed and programmed by an electronic circuit (Hardware and Software) and powered by a fixed, or controlled, direct voltage source: it is essentially composed of a stator core of either solid or laminated ferromagnetic material with evenly spaced slots either inside or outside the circumference used for the housing of the stator windings which create magnetic fields with front opposite and adjacent opposite polarities; of a rotor housed inside or outside the stator slot whose polarities are diametrically opposite or adjacent opposite; of a shutter, keyed onto the rotor shaft, which is used to sense the motor's angular position: characterized by the fact that the electronic control system may either be contained in a single board or be modular, with interchangeable modules comprising a power circuit a control circuit a protection and a special function circuit; and by the fact that with the "artificial intelligence" located either on-board or on a board, the motor can communicate directly with other motors, it can "see" and recognize the external world, execute and transmit commands and instructions.

2. A motor, as per claim No. 1, characterized by the fact that the rotor is a smooth cylindrical permanent magnet rotor in a single piece, from which it is possible to obtain one or more pairs of poles, or, alternatively, is made of two semicylindrical sectors glued to one another with the drive shaft in-between: or else made up of salient poles, consisting of permanent magnet elements contained in a structure which may either be isotropic or non isotropic; the rotor is wound and self-energized and that the magnetic field generated by windings crossed by the current supplied by the power supply, is such that it can control the current of the main inductor continually, with no galvanic contacts with external power sources; the rotor pump is an open cilinder fixed on the motor shaft with blades; the rotor having an axial magnet and radial polar expancions.

3. A motor, as per claim No. 1, characterized by the fact that the stator winding is produced by means of two-wire coils connected in such a way that the current flows through the individual windings always in the same direction; moreover, the final power stage used to power this type of winding is of the flyback type; by the fact that the stator winding is of the full bridge type, regardless of the number of phases, and is always crossed by current, by fully exploiting the copper and cutting down the losses due to Joule's effect; and whose final stage is produced with f/2 H Fullbridge; furthermore, by the fact that the final stage can be produced either by means of complementary components or in Totem-pole form.

4. A motor, as per claim No. 1, characterized by the fact that it is fitted with a position encoder consisting of a disk or drum type shutter with two or more sectors as well as a sector with windows, and in addition to that characterized by the presence of sensors for the detection of the angular position of the rotor, a sensor for the tachometric measurement function which ensures stability and a ≤ 1% accuracy of the full scale in the motor's operating range that corresponds to a 1/20 f.s. ratio; the encoder consists of a single block comprising a support which houses the sensors in special seats and a printed circuit which houses the detectors themselves and connects them both to one another and to a special connector to which in low power motors, stator windings can also be connected; moreover, the motor without encoder can operate also without using any type of sensors.

5. A motor, as per claim No. 1, characterized by the fact of having only one power supply and which therefore runs either on a battery on a single dc power supply; as a result, it is possible to obtain both directions of rotation with identical torque and angular speed characteristics by means of decoders; it is possible to control the number of RPM's. by keeping it constant with varying loads by means of a control circuit which has an integro-differential network modifiable according to the motor's characteristics; it has a MOSFET or two-pole Tyristor power circuit which ensures high efficiency levels, thanks to the recovery of Lenz energy; by the fact that the electronic control system is built into the motor's bearing structure so as to form a single block: the electronic control system may consist either of interchangeable modules for the execution of different applications (by fitting different modules); control modules are characterized through an integration network external to the module itself; and by the presence of a special function circuit enabling the motor to perform pre-programmed operations; it can be programmable by means of the internal S/W for simple operations and can feature the possibility of being linked via a bus to an external PC for programs integrated with other systems.

6. A motor; as per claim No. 1, characterized by the fact that it can communicate with other motors or with other units without the aid of an external computer; it can be interfaced directly with the machine tool, eliminating the PLC; it can supply to the external world data such as: set speed, current speed, the resisting torque applied to the motor shaft, the acceleration and direction of rotation, by making use of the Firmware residing on-board the motor.

7. A motor, as per claim No. 1, characterized by the fact that the Firmware residing on-board is in constant auto-control (continuous byte) and can immediately execute an error flag command in the event of a H/W or S/W malfunction.

8. A motor, as per claim No. 1, characterized by the fact that it can be remote controlled through the air in frequency modulation (FM) or amplitude modulation (AM) mode or else via a cable based on any present-day communication standard, such as: 1553B for military applications, ISDN for civil telephone applications, RS232 for industrial applications, PC, etc.

9. A motor, as per claim No. 1, characterized by the fact that it can instantaneously reverse its direction of rotation at any speed, continually through time; that it can have a positioning, at the braking stage, of 360/N and phases and it can stay halted for an indefinite period of time.

10. A motor, as per claim No. 1, characterized by the fact that it has decision-making capabilities with modifiable priority (in terms of both hardware and software) and which, as a result, can be either a Master or a Slave (with no interface with external computers); it can be programmed by the operator through simple instructions and which can memorize its functions on a permanent basis.

11. A motor, as per claim No. 1, possessing a double functional characterization, being able to adjust the coils of its stator winding as a function of full scale to obtain the greatest possible efficiency.

12. A motor, as per claim No. 1, characterized by the fact that it has a Ditalker and an optical sensor on-board, and therefore is capable to to "see" the external world and to reproduce it in digital form inside itself and that can utter syllables in succession so as to compose words.

13. A motor, as per claim No. 1, characterized by the fact that it can operate submersed in a non conductive or corrosive liquid, like fuels, alcohols, petrol + alcohol, etc.; that it can operate, through component selection, in three ranges: civil, extended and military, up to 30,000 m above sea level.

Fig.1

Fig. 2

A

B

C

D

E

F

EP 0 458 211 A2

Fig. 3

Fig.4

Fig.5

Fig.6

— Diagramma a Blocchi —.

Fig 7

16

U 1
Circuito di
Controllo
con Rete
Correttrice
Integrata

R3
R1  C1
R2
R5
C2    R4

COMPONENTI DA SELEZIONARE

C1 & C2: nella gamma da ØuF  a  10uF
R1, R2, R3, R4, R5:
nella gamma da Ø Ohm a  4,7 M ohm
Questo al fine di ottenere, a seconda
i casi il segnale $\Sigma$ (errore)
il più piccolo possibile
Questo segnale potrebbe essere
$\Sigma$ (accelerazione), $\Sigma$ velocità

EP 0 458 211 A2

Fig.8

Fig. 9

Fig.10

EP 0 458 211 A2

Fig.11

FIG 12

```
            MAIN µP1                                      LdR3 = 0010 H                                    RB = MEM (XY00 + RA)
                                                                                                          JU  "PWM"
                                                      "WAIT"
    RESET                                                 LdRO, MEM (XXX2)                             "PWM"
                                                          LdR1, MEM (XXX1)                                RC = RB x 00F0 H
        FR  = 0000 H          Fill Register con 0 H       Test bit 7, RO                                  R7 = RC + 000F H
        SP  = A000 H          Carica Stack pointer        JEQ  "MANU"                                     RB = RB x R7
            |              ]                              Test bit 7, R1                                  OUT2 OOR4, RB
            |              ]   Inizializza il µP          JNEQ "START"                                    R6 = R6 x 0000 H
            |              ]                              JU   "WAIT"
        LdRO = 1400 H      ]                                                                              Return
        LdR1 = CFFF H      |                          "START"
        LdR2 = AAAA H      |                              EiP                                          SUB2
                                                          LdR4 = RO and 00C0                               LdRA, MEM (XXX3)
    "TEST MEM"                                            OUT2 RTi, R4                                     R6 = R6 + 1
        STR2, RO                                          Test bit 3, R1                                   R5 = RA - (R6 x Nfasi)
        LDR3, (RO)           Test della zona RAM          JNEQ "STOP"                                      R8 = (RA +R5) x R2 x R1
        COMP R2, R3                                       JU   "WAIT"
        JNEQ "PRINT FAIL"    -                                                                            Return
        COMP RO, R1                                   "STOP"
        JEQ "INIT"                                        Test bit 7, R1                                 SUB3
        INCR RO by 1                                      JNEQ "PRINT FAIL"                                Test bit 7, R1
        JU "TEST MEM"      ]                              DPi                                              JEQ "DECEL."
                                                          JU   "HALT"                                      R3 = R3 - FFFF H
    "INIT"              ]                                                                                  JEQ  "DEC1"
        LdRO IN2 DIR3   |   Input diretto variabili   0300 H                                              R3 = R3 + 10 H
        STRO, XXX2      |                                 IN2 0300 H, R4          Input vettore
                                                          SHIFTL R4                                        Return
        DPi                 Disable progr. interrupt      OR R4
                                                          SHIFTL R4                                     "DECEL."
        LdRF = 0300 H   ]   Save subroutine               OR R4                                           Test bit 3, R1
        ST16,  0004 H   |   Gestione interrupt            JSi (R4)                Jump subrout. ind. R4    JEQ "PRINT FAIL"
                                                          RTi                     Return from interrupt    LdRA, MEM (XXX3)
        OUT2  OC0D H        Disable interrupt                                                              R2 = R2 - 0001 H
        OUT2  OC00 H        Master clear interr gener. SUB1                                                JEQ Return
        LdSP = 8000 H   ]                                 IN2 DIR1, RA            Input F1-F2 — RA         R2 = R2 - 10 H
                        |                                 RA = RA and 0003 H
                        |   Inizializzazione µP           Test bit 1, R1                                 "DEC1"
                        |   Verifica FIFO e carica-       JNEQ "CCW"                                        LdR5, MEM (XXX3)
                        |   mento sequenza                Test bit 2, R1                                    R5 = RA - R5
                        |                                 JNEQ "CW"                                         JEQ Return
                        ]                                 JU  "PRINT FAIL"                                  LdR2 = FFFF H
        OUT2  OCOF          Enable interrupt                                                               LdR3 = 0010 H
                                                      "CW"                                                 JU Return
    INTERRUPT REQUEST                                     RB = MEM (XX00 + RA)
                                                          JU  "PWM"
    "HALT"
        LdR2 = FFFF H                                 "CCW"
```

Fig.13

A

B

Single Master SPI

C

Multiple Master SPI

FIG. 14

DIR 3 ⟶ XXX2 (1/2) ....

X X X X X X X X

BIT 0

VOCAL ON/OFF

CONSTANT SOFT START

OPTICAL RESOLUTION

OPTICAL ON/OFF

MANUAL/AUTO

DIR 2 ⟶ XXX1 (1/2)

X X X X X X X X

BIT 0

CCW

CW

STOP

BRAKE

COSTANTI INTEGRO-DERIVATE

START

Fig.15

24

A

```
;**----------------------------------------------------------
;
; MTASE : EXTERNAL CONDITIONS DETECTED DURING CALL INTERRUPT
;
;        bit 0 ----------) not used
;        bit 1 ----------) not used
;        bit 2 ----------) not used
;        bit 3 ----------) step count completed
;        bit 4 ----------) presence ac voltage
;        bit 5 ----------) battery level charge
;        bit 6 ----------) photocell
;        bit 7 ----------) overcurrent
```

B

```
;**----------------------------------------------------------
;
; TAS1 : INPUT PORT EXTERNAL CONDITIONS
;
;        bit 0 ----------) motor sensor 1
;        bit 1 ----------) motor sensor 2
;        bit 2 ----------) external timeout closure
;        bit 3 ----------) external photocell
;        bit 4 ----------) start (hardware)
;        bit 5 ----------) presence ac voltage
;        bit 6 ----------) battery level charge
;        bit 7 ----------) current interrupt
```

C

```
;**----------------------------------------------------------
;
; MTAS1 : INPUT PROGRAM MEMORY LOCATION IN AUTORUNNING MODE
;
;        bit 0 ----------) not used
;        bit 1 ----------) not used
;        bit 2 ----------) forward / backward
;        bit 3 ----------) brake
;        bit 4 ----------) start (software)
;        bit 5 ----------) not used
;        bit 6 ----------) not used
;        bit 7 ----------) not used
```

D

Fig.16

25

Fig.17

FIG 18